# FASCICULE DE BREVET EUROPEEN

(11) **EP 0 680 863 B1**
(45) Date de publication et mention de la délivrance du brevet: **10.06.1998**
(21) Numéro de dépôt: 95400719.1
(22) Date de dépôt: 31.03.1995
(51) Int. Cl.: B60T 13/72, B60T 7/12, B60T 8/48

(54) **Système de freinage à double commande et à contrôle d'état**
Bremssystem mit Doppelsteuerung und Betriebsüberwachung
Brake system with dual control and condition monitoring

(30) Priorité: 06.05.1994 FR 9405630
(43) Date de publication de la demande: 08.11.1995
(73) Titulaire: Bosch Systemes de Freinage, 93700 Drancy (FR)
(72) Inventeur: Douillet, Christian, F-92800 Puteaux (FR)
(74) Mandataire: Bentz, Jean-Paul

(56) Documents cités:
- EP-A- 0 435 113
- EP-A- 0 486 340
- DE-A- 3 337 603
- DE-B- 1 949 364

## Description

La présente invention concerne un système de freinage à double commande et à contrôle d'état pour véhicule à moteur, comprenant un maître-cylindre, un servomoteur d'assistance au freinage, une pédale de frein susceptible de mouvoir une tige de commande du servomoteur pour actionner le maître-cylindre, des moyens d'actionnement électrique, incluant un calculateur et une électrovalve, pour commander le servomoteur en vue d'actionner le maître-cylindre sans action sur la pédale de frein, au moins un capteur de position de la pédale de frein, relié à une entrée du calculateur pour l'informer d'un actionnement volontaire de la pédale de frein, et au moins un avertisseur lumineux commandé lors d'un freinage du véhicule, la tige de commande étant déplacée lors du fonctionnement des moyens d'actionnement électrique sans déplacement corrélatif de la pédale de frein.

Un système de ce type est par exemple décrit dans le document EP-0 486 340.

Ce document illustre parfaitement le principe d'un système de freinage à double commande, de tels systèmes étant aujourd'hui susceptibles d'être commandés soit par une action volontaire du conducteur du véhicule sur la pédale de frein, soit de façon automatique par un calculateur, par exemple pour éviter le patinage des roues motrices.

Grâce à un tel système, le conducteur du véhicule peut à tout moment, lorsque c'est utile, imposer un couple de freinage supérieur à celui qui est appliqué de façon automatique.

Cependant, il est nécessaire dans cette application de prévoir que le calculateur et l'avertisseur lumineux soient tous deux informés de l'état dans lequel se trouve le système de freinage, et il est souhaitable que cette information leur soit fournie par des moyens aussi simples et efficaces que possible.

La présente invention se situe dans ce contexte, et a pour but de proposer un système de freinage du type précédemment défini, qui réponde à cette exigence.

A cette fin, le système de freinage de la présente invention, est essentiellement caractérisé en ce qu'il comprend un capteur de position de la tige de commande, qui est relié à l'avertisseur lumineux.

Selon un mode de réalisation très simple, les capteurs de positions sont constitués de contacts électriques.

En outre, le capteur de position de la tige de commande est de préférence sensible à la position de rotation d'un levier articulé sur la tige de commande.

D'autres caractéristiques et avantages de l'invention ressortiront clairement de la description qui en est faite ci-après, à titre indicatif et nullement limitatif en référence aux figures annexées, parmi lesquelles :

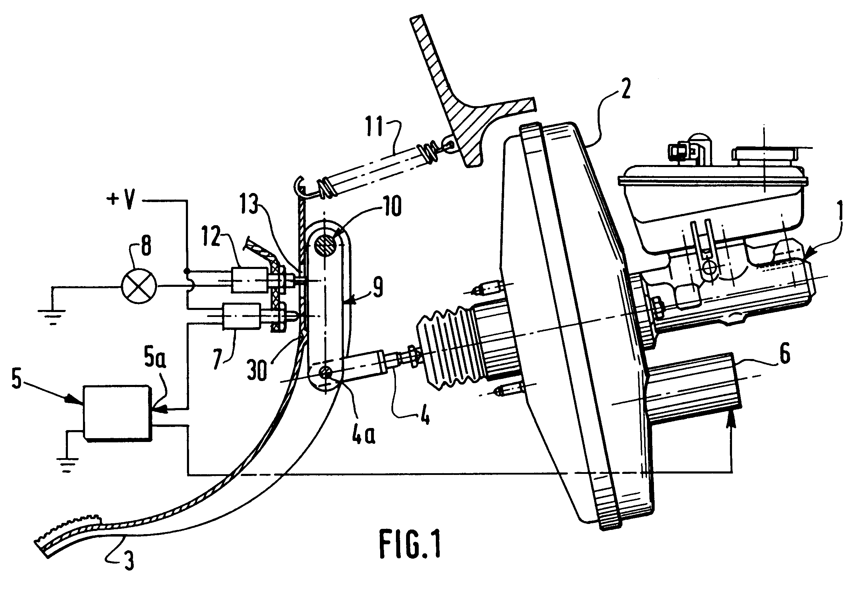

- la Figure 1 est une vue en plan et en coupe partielle d'un système de freinage conforme à l'invention, représenté dans un premier état; et
- la Figure 2 est une vue semblable à la Figure 1, représentant ce système dans un second état.

Comme le montrent ces deux figures, le système de freinage concerné comprend essentiellement un maître-cylindre 1, un servomoteur 2 d'assistance au freinage, une pédale de frein 3 susceptible de mouvoir une tige de commande 4 du servomoteur pour actionner le maître-cylindre 1, des moyens d'actionnement électrique, incluant un calculateur 5 et une électrovalve 6, pour commander le servomoteur en vue d'actionner le maître-cylindre, au moins un capteur de position 7 de la pédale de frein, et au moins un avertisseur lumineux 8 commandé lors d'un freinage du véhicule.

Le calculateur 5 reçoit, de façon bien connue, des signaux électriques en provenance de divers capteurs, notamment de capteurs non représentés de rotation des roues, sous l'influence desquels il peut ouvrir ou fermer l'électrovalve 6 pour actionner ou cesser d'actionner le servomoteur 2, donc le maître-cylindre 1, indépendamment de toute action sur la pédale de frein 3.

La tige de commande 4 est articulée à son extrémité 4a sur un levier 9 qui est monté rotatif autour d'un axe fixe 10, autour duquel la pédale 3 est elle aussi montée à rotation tout en étant rappelée dans une position de repos par un ressort 11.

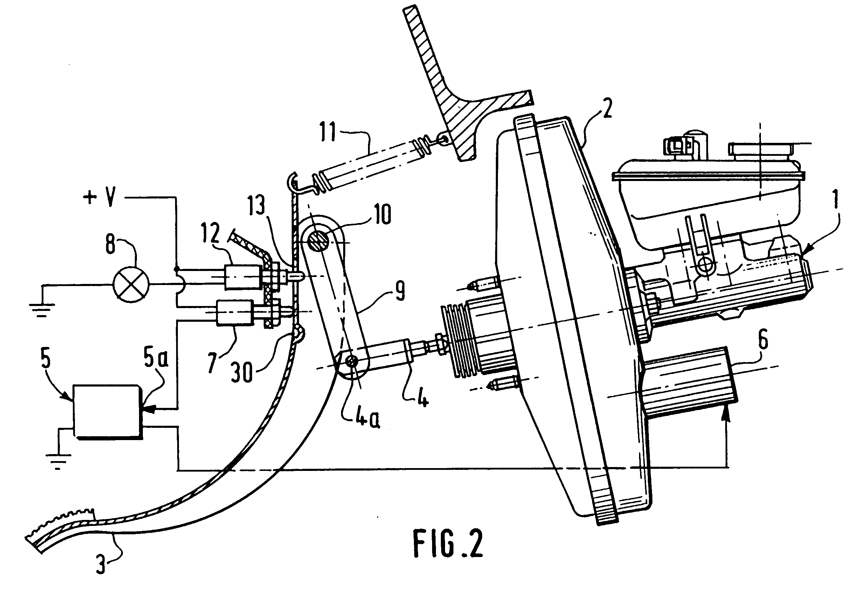

D'autre part, la pédale 3 présente un appui 30 susceptible de pousser le levier 9 en direction du maître-cylindre 1, ces dispositions permettant à la pédale de pousser ensemble le levier 9 et la tige de commande 4 lorsque cette pédale est sollicitée par le conducteur, et à l'ensemble levier 9 - tige de commande 4 de se déplacer vers le maître-cylindre, sans déplacement corrélatif de la pédale de frein, lorsque le servomoteur est actionné par l'ouverture de l'électrovalve 6 sous le contrôle du calculateur 5, comme le montre la figure 2. Selon l'invention, le capteur de position 7 de la pédale de frein 3 est relié à une entrée 5a de ce calculateur, pour l'informer de l'actionnement volontaire de la pédale de frein par le conducteur.

Par ailleurs, le système comprend un capteur 12 de position de la tige de commande, qui est relié à l'avertisseur lumineux 8, ce capteur 12 traversant par exemple un orifice 13 pratiqué dans la pédale pour être en fait sensible à la position de rotation du levier 9, donc indirectement sensible à la position de la tige de commande 4.

Dans le mode de réalisation recommandé de l'invention, les capteurs de positions 7 et 12 sont constitués de simples contacts électriques, le capteur 12 servant ainsi à établir ou interrompre une liaison galvanique entre l'indicateur lumineux 8 et une source de tension électrique +V selon que la tige de commande 4 est ou non poussée vers le maître-cylindre, et le capteur 7 servant à appliquer sélectivement le potentiel +V à la borne 5a du calculateur lorsque la pédale 3 est actionnée par le conducteur.

Grâce à ces caractéristiques, l'avertisseur lumineux 8 se trouve alimenté lorsque le véhicule freine quelle que soit la façon dont le freinage est appliqué, et le calculateur, qui est informé de tout actionnement volontaire de la pédale 3, peut aisément prendre en compte cette information pour rendre si nécessaire la priorité au freinage volontaire, par exemple en cessant d'actionner l'électrovalve 6.

## Revendications

1. Système de freinage à double commande et à contrôle d'état pour véhicule à moteur, comprenant un maître-cylindre (1), un servomoteur (2) d'assistance au freinage, une pédale de frein (3) susceptible de mouvoir une tige de commande (4) du servomoteur pour actionner le maître-cylindre (1), des moyens d'actionnement électrique, incluant un calculateur (5) et une électrovalve (6), pour commander le servomoteur (2) en vue d'actionner le maître-cylindre (1) sans action sur la pédale de frein, au moins un capteur (7) de position de la pédale de frein, relié à une entrée (5a) du calculateur, pour l'informer d'un actionnement volontaire de la pédale de frein, et au moins un avertisseur lumineux (8) commandé lors d'un freinage du véhicule, la tige de commande étant déplacée lors du fonctionnement des moyens (5, 6) d'actionnement électrique sans déplacement corrélatif de la pédale de frein (3), caractérisé en ce qu'il comprend un capteur (12) de position de la tige de commande (4), qui est relié à l'avertisseur lumineux (8).

2. Système de freinage suivant la revendication 1, caractérisé en ce que les capteurs de positions (7, 12) sont constitués de contacts électriques.

3. Système de freinage suivant la revendication 1 ou 2, caractérisé en ce que le capteur (12) de position de la tige de commande est sensible à la position de rotation d'un levier (9) articulé sur la tige de commande.

## Claims

1. Braking system with dual control and status monitoring for a motor vehicle, comprising a master cylinder (1), a servo (2) for boosting the braking, a brake pedal (3) capable of moving a control rod (4) of the servo in order to actuate the master cylinder (1), electrical actuation means including a computer (5) and a solenoid valve (6), in order to control the servo (2) for the purpose of actuating the master cylinder (1) without action on the brake pedal, at least one sensor (7) for sensing the position of the brake pedal, which sensor is connected to one input (5a) of the computer in order to inform the computer of a voluntary actuation of the brake pedal, and at least one luminous warning device (8) controlled during braking of the vehicle, the control rod being moved during operation of the electrical actuation means (5, 6) without corresponding movement of the brake pedal (3), characterized in that it comprises a sensor (12) for sensing the position of the control rod (4), which sensor is connected to the luminous warning device (8).

2. Braking system according to Claim 1, characterized in that the position sensors (7, 12) are made up of electrical contacts.

3. Braking system according to Claim 1 or 2, characterized in that the sensor (12) for sensing the position of the control rod is sensitive to the rotational position of a lever (9) articulated to the control rod.

## Patentansprüche

1. Bremssystem mit Doppelsteuerung und Zustandsüberwachung für Motorfahrzeuge, umfassend einen Hauptzylinder (1), einen Servomotor (2) zur Bremskraftunterstützung, ein Bremspedal (3), durch welches eine Steuerstange (4) des Stellantriebs zum Betätigen des Hauptzylinders (1) bewegbar ist, elektrische Betätigungsmittel mit einem Rechner (5) und einem Elektroventil (6) zum Steuern des Servomotors (2), um den Hauptzylinder (1) ohne Einwirkung auf das Bremspedal zu betätigen, und zumindest einen Geber (7) für die Stellung des Bremspedals, welcher mit einem Eingang (5a) des Rechners verbunden ist, um diesen über eine absichtliche Betätigung des Bremspedals zu informieren, und zumindest ein, bei einer Fahrzeugbremsung betätigtes Warnlicht (8), wobei die Steuerstange beim Betrieb der elektrischen Betätigungsmittel (5, 6) ohne entsprechende Verlagerung des Bremspedals verlagert wird, (3), dadurch gekennzeichnet, daß es einen Geber (12) für die Stellung der Steuerstange (4) umfaßt, welcher mit dem Warnlicht (8) verbunden ist.

2. Bremssystem nach Anspruch 1, dadurch gekennzeichnet, daß die Stellungsgeber (7, 12) aus elektrischen Kontakten bestehen.

3. Bremssystem nach Anspruch 1 oder 2, dadurch gekennzeichnet, daß der Geber (12) für die Stellung der Steuerstange die Drehstellung eines an die Steuerstange angelenkten Hebels (9) erfaßt.
